# EUROPÄISCHE PATENTSCHRIFT

(11) **EP 1 804 080 B1**
(45) Veröffentlichungstag und Bekanntmachung des Hinweises auf die Patenterteilung: **24.03.2010**
(21) Anmeldenummer: 05113036.7
(22) Anmeldetag: 28.12.2005
(51) Int. Cl.: G01T 1/29

(54) **Vorrichtung zum Auslesen von in einer Speicherleuchtstoffschicht abgespeicherten Röntgeninformationen**
Device for reading out x-ray information stored in a storage phosphor layer
Dispositif destiné à la lecture d'informations radiographiques stockées dans une couche fluorescente de mémoire

(43) Veröffentlichungstag der Anmeldung: 04.07.2007
(73) Patentinhaber: Agfa-Gevaert HealthCare GmbH, 50670 Köln (DE)
(72) Erfinder: Hofmuth, Walter, 80469 München (DE); Loistl, Rudolf, 82008 Unterhaching (DE); Müller, Roland, 81539 München (DE)

(56) Entgegenhaltungen:
- US-A- 5 260 573
- US-A1- 2004 004 871
- US-B1- 6 310 357

## Beschreibung

Die vorliegende Erfindung betrifft eine Vorrichtung zum Auslesen von in einer Speicherleuchtstoffschicht abgespeicherten Röntgeninformationen gemäß dem Oberbegriff des Anspruchs 1.

Solche Vorrichtungen werden insbesondere im Bereich der Computer-Radiografie (CR) für medizinische Zwecke eingesetzt. Dabei wird von einem Objekt, beispielsweise einem Patienten oder einem Körperteil des Patienten, mittels Röntgenbestrahlung ein Bild erzeugt, das in einer Speicherleuchtstoffschicht als latentes Bild abgespeichert wird. Ein solches Röntgenbild enthält somit Röntgeninformationen über das Objekt. Zum Auslesen der in der Speicherleuchtstoffschicht abgespeicherten Röntgeninformationen wird die Speicherleuchtstoffschicht mittels einer Bestrahlungseinrichtung angeregt. Die Speicherleuchtstoffschicht emittiert aufgrund dieser Anregung Licht, das eine Intensität entsprechend der in der Speicherleuchtstoffschicht abgespeicherten Röntgeninformationen aufweist. Das von der Speicherleuchtstoffschicht ausgesandte Licht wird von einer Detektionseinrichtung erfasst und in elektrische Signale gewandelt, die ein Abbild der Röntgeninformationen enthalten. Die elektrischen Signale werden weiterverarbeitet und die in der Speicherleuchtstoffschicht abgespeicherten Röntgeninformationen anschließend sichtbar gemacht. Die Röntgeninformationen können beispielsweise direkt auf einem Monitor dargestellt oder mittels eines speziell für Röntgenbilder verwendbaren Druckers auf einen fotografischen Röntgenfilm geschrieben werden.

Die Speicherleuchtstoffschicht ist üblicherweise auf einer Trägerschicht aufgebracht, die zusammen eine Speicherleuchtstoffplatte bilden. Zum korrekten Auslesen der Speicherleuchtstoffschicht ist meist eine hohe Ebenheit der Speicherleuchtstoffplatte erforderlich. Dadurch können Signalschwankungen im detektierten Signal, und somit Bildfehler, weitgehend verhindert werden. Um diese Ebenheit zu erreichen, wird die Speicherleuchtstoffplatte bei einigen Varianten von Auslesevorrichtungen auf eine ebene Auflage aufgedrückt oder an die Auflage angesaugt. Es ist auch möglich, sowohl an der Speicherleuchtstoffplatte als auch an der Auflage Magnete anzubringen, die das ebene Aufliegen der Speicherleuchtstoffplatte gewährleisten. Diese Varianten haben allerdings die Nachteile, dass sie einen relativ großen Bauraum benötigen, zusätzliches Gewicht bedeuten und eine teure und aufwändige Mechanik erforderlich machen.

Aus US 6,310,357 B1 ist eine gattungsgemäße Vorrichtung bekannt, bei welcher Signale eines Abstandsdetektors, der den Durchhang der Speicherleuchtstoffplatte erfasst, einer Steuerungseinheit zugeführt werden, durch die der Durchhang einer Detektorzeile entsprechend dem Durchhang der Speicherleuchtstoffplatte eingestellt werden kann.

Es ist die Aufgabe der Erfindung, eine Vorrichtung zum Auslesen von in einer Speicherleuchtstoffschicht abgespeicherten Röntgeninformationen anzugeben, mit der auf technisch einfache Weise eine gute Bildqualität des ausgelesenen Röntgenbildes gewährleistet werden kann.

Diese Aufgabe wird gemäß der technischen Lehre des Anspruchs 1 gelöst. Die erfindungsgemäße Vorrichtung zum Auslesen von in einer Speicherleuchtstoffschicht abgespeicherten Röntgeninformationen enthält einen Abstandssensor zum Bestimmen eines Abstands des Abstandssensors zu der auf der Auflage aufliegenden bzw. von der Auflage geführten Speicherleuchtstoffplatte. Des Weiteren ist das Steuermittel zum Verarbeiten der aus der Speicherleuchtstoffschicht ausgelesenen Röntgeninformationen so ausgestaltet, dass es die ausgelesenen Röntgeninformationen in Abhängigkeit von dem mittels des Abstandssensors bestimmten Abstand verarbeitet, wobei die Unebenheit der Speicherleuchtstoffplatte berücksichtigt wird.

Aufgrund der vorliegenden Erfindung können Bildfehler in dem detektierten Bild, die aufgrund einer Unebenheit der Speicherleuchtstoffplatte beim Aufliegen bzw. bei der Führung auf der Auflage entstehen können, weitgehend vermieden werden. Die Unebenheit der Speicherleuchtstoffplatte beim Aufliegen bzw. bei der Führung auf der Auflage entspricht im Allgemeinen einer Krümmung der Speicherleuchtstoffplatte. Diese Krümmung, insbesondere ihr Verlauf entlang der Länge der Speicherleuchtstoffplatte, kann mittels des Abstandssensors festgestellt werden. Die auf diese Weise bestimmte Unebenheit wird von dem Steuermittel beim Verarbeiten von elektrischen Signalen, die die ausgelesenen Röntgeninformationen enthalten, berücksichtigt. Der Abstandssensor bestimmt abhängig von seiner Anordnung insbesondere den Abstand zwischen einem Referenzort am Abstandssensor und einem Ort auf einer Oberfläche der Speicherleuchtstoffplatte.

Der Abstandssensor hat innerhalb der Vorrichtung vorteilhafterweise einen festen, vorgegebenen Abstand zu einer durch die Auflage gebildeten Auflageebene für die Speicherleuchtstoffplatte.

Mittels der vorliegenden Erfindung ist es auf effektive und besonders kostengünstige Weise möglich, mit wenigen Komponenten eine gute Bildqualität des ausgelesenen Röntgenbildes zu erreichen. Eine leichte Bauweise bei kleinem Bauraum ist durch die Erfindung möglich. Darüber hinaus kann der Verschleiß der Speicherleuchtstoffplatte sehr gering gehalten werden, da z. B. ein Andrücken oder Ansaugen der Speicherleuchtstoffplatte an die Auflage nicht erforderlich ist. Die Erfindung ermöglicht es darüber hinaus, dass zufällige und hochfrequente Signalschwankungen, z. B. durch Stöße, beim Auslesen der Röntgeninformationen erkannt und beim Verarbeiten ausgeglichen werden können. Es ist möglich, dies in "Echtzeit" zu gewährleisten.

Als Auflage im Sinne der Erfindung kann eine ebene, geschlossene Auflagefläche, insbesondere eine durchgängige Auflageplatte, dienen, auf welcher die Speicherleuchtstoffplatte aufliegt. Alternativ können als Auflage im Sinne der Erfindung aber auch mehrere einzelne Auflageelemente dienen, auf welchen die Speicherleuchtstoffplatte aufliegt und/oder von welchen die Speicherleuchtstoffplatte während des Auslesens an einer Detektionseinrichtung vorbei geführt wird. Als Auflageelemente sind z.B. einzelne Rollen oder Rollenpaare, Kufen oder Führungsschienen geeignet, welche eine Auflageebene aufspannen, in welcher die Speicherleuchtstoffplatte liegt bzw. geführt wird.

In einer vorteilhaften Ausgestaltung der Erfindung ist der Abstandssensor so angeordnet, dass der Abstand des Abstandssensors zu der Trägerschicht der Speicherleuchtstoffplatte bestimmbar ist. Bei dieser Ausführung der Erfindung ist der Abstandssensor auf der Rückseite der Speicherleuchtstoffplatte angeordnet. Der Bezugsort, zu dem der Abstandssensor den Abstand bestimmt, liegt auf der Oberfläche der Trägerschicht. Durch das Abtasten der Trägerschicht kann auf einfache Weise vermieden werden, dass durch die Abstandsbestimmung möglicherweise ein unerwünschtes Anregen der Speicherleuchtstoffschicht erfolgt, da die Speicherleuchtstoffschicht dabei nicht benötigt wird.

Vorzugsweise ist der Abstandssensor so angeordnet, dass der Abstand des Abstandssensors zu der Speicherleuchtstoffschicht der Speicherleuchtstoffplatte bestimmbar ist. Bei dieser Ausführung der Erfindung ist der Abstandssensor auf der Vorderseite der Speicherleuchtstoffplatte angeordnet. Der Bezugsort, zu dem der Abstandssensor den Abstand bestimmt, liegt auf der Oberfläche der Speicherleuchtstoffschicht. Dadurch hat der Abstandssensor insbesondere dann, wenn die Speicherleuchtstoffschicht bei aufliegender Speicherleuchtstoffplatte der Auflage abgewandt ist, ohne weiteres einen freien Zugang zu dem Bezugsort. Der Abstand kann somit auf besonders einfache Weise bestimmt werden. Abhängig von der Art des eingesetzten Abstandssensors ist dabei zu beachten, dass möglicherweise ein unerwünschtes Anregen der Speicherleuchtstoffschicht bei der Abstandsbestimmung erfolgen kann. Vorteilhafterweise kann die erfindungsgemäße Vorrichtung in diesem Fall so ausgestaltet sein, dass ein solches Anregen verhindert oder eine aufgrund des Anregens von der Speicherleuchtstoffschicht emittierte Strahlung detektiert und den ausgelesenen Röntgeninformationen in geeigneter Weise zugeordnet wird.

In einer weiteren vorteilhaften Ausgestaltung weist die Auflage einen Durchbruch auf, und der Abstandssensor ist auf derjenigen Seite der Auflage, die der aufliegenden Speicherleuchtstoffplatte abgewandt ist, so angeordnet, dass der Abstand durch den Durchbruch hindurch bestimmbar ist. Diese Ausgestaltung ist insbesondere dann vorteilhaft, wenn die Auflage eine weitgehend geschlossene Auflagefläche für das Auflegen der Speicherleuchtstoffplatte aufweist. In diesem Fall wird dem Abstandssensor mittels des Durchbruchs eine einfach zu realisierende Möglichkeit zur Verfügung gestellt, durch den Durchbruch hindurch den Bezugsort auf der Speicherleuchtstoffplatte zum Bestimmen des Abstands abzutasten.

In einer besonders bevorzugten Ausgestaltung der Erfindung ist der Abstandssensor ein berührungsloser, insbesondere ein optischer, Sensor. Dadurch wird eine Krafteinleitung in die Speicherleuchtstoffplatte vermieden und deren Verschleiß gering gehalten. Der Abstandssensor kann besonders vorteilhaft ein Lasertriangulationssensor sein. Ein solcher Abstandssensor liefert ein besonders exaktes Ergebnis. Es ist allerdings ebenso möglich, einen kapazitiven oder induktiven Sensor oder einen Sensor, der mit Ultraschall arbeitet, einzusetzen.

Vorzugsweise weist das Steuermittel Angaben zu einem Krümmungsverlauf der Speicherleuchtstoffplatte auf. Dazu ist das Steuermittel so ausgestaltet, dass es die aus der Speicherleuchtstoffschicht ausgelesenen Röntgeninformationen in Abhängigkeit von diesen Angaben verarbeitet. Die Angaben zu dem Krümmungsverlauf können vorteilhafterweise in einer Tabelle, einer sogenannten Look-Up Tabelle, enthalten sein, die sich auf besonders einfache Weise in dem Steuermittel implementieren lässt. Die Angaben zu dem Krümmungsverlauf wurden für die Speicherleuchtstoffplatte, insbesondere für die spezielle Zusammensetzung ihrer Trägerschicht, bereits vor der Verwendung der Speicherleuchtstoffplatte zum Abspeichern von Röntgeninformationen, z. B. mittels Tests, ermittelt. Insbesondere bei einem homogenen Krümmungsverlauf der Speicherleuchtstoffplatte kann dieser durch das Steuermittel zum Verarbeiten der ausgelesenen Röntgeninformationen eingesetzt werden. Die Angaben zu dem Krümmungsverlauf ermöglichen ein besonders genaues Verarbeiten der Röntgeninformationen bei gleichzeitig geringem Aufwand beim Bestimmen des Abstands.

In einer bevorzugten Variante der Erfindung weist das Steuermittel Angaben zu mehreren verschiedenen Krümmungsverläufen der Speicherleuchtstoffplatte auf. Dabei ist es so ausgestaltet, dass es die Angaben zu einem der mehreren verschiedenen Krümmungsverläufe in Abhängigkeit von dem bestimmten Abstand auswählt und die aus der Speicherleuchtstoffschicht ausgelesenen Röntgeninformationen in Abhängigkeit von den ausgewählten Angaben verarbeitet. Das Feststellen eines einzigen Abstands an einem bestimmten Ort einer der Oberflächen der Speicherleuchtstoffplatte kann somit ausreichen, um den gesamten Krümmungsverlauf der Speicherleuchtstoffplatte zu bestimmen.

In einer weiteren, besonders bevorzugten Weiterbildung der Erfindung ist ein Erkennungsmittel zum Erkennen eines Typs der auf der Auflage aufliegenden Speicherleuchtstoffplatte vorhanden. Das Steuermittel weist ferner für mehrere verschiedene Typen von Speicherleuchtstoffplatten Angaben zu einem bzw. mehreren Krümmungsverläufen auf. Dabei ist es so ausgestaltet, dass es die Angaben zu dem Krümmungsverlauf in Abhängigkeit von der verwendeten Speicherleuchtstoffplatte auswählt und die aus der Speicherleuchtstoffschicht ausgelesenen Röntgeninformationen in Abhängigkeit von den ausgewählten Angaben verarbeitet. Die Speicherleuchtstoffplatte kann beispielsweise eine spezielle Kennung aufweisen, die von dem Erkennungsmittel identifiziert werden kann. Dieser Ausgestaltung der Erfindung liegt die Erkenntnis zugrunde, dass Speicherleuchtstoffplatten mit einer unterschiedlichen Zusammensetzung insbesondere ihrer Trägerschichten unterschiedliche Krümmungsverläufe haben. Durch das Feststellen des Typs der Speicherleuchtstoffplatte kann auf besonders einfache Weise ein exaktes Verarbeiten der Röntgeninformationen erfolgen.

Die erfindungsgemäße Vorrichtung enthält eine Bestrahlungseinrichtung zum Bestrahlen der Speicherleuchtstoffschicht mit einer Anregungsstrahlung. Des Weiteren ist eine Detektionseinrichtung zum Erfassen von Emissionsstrahlung vorhanden, die die Speicherleuchtstoffschicht aufgrund des Bestrahlens mittels der Anregungsstrahlung ausgibt. Die Bestrahlungs- und die Detektionseinrichtung sind vorzugsweise so angeordnet, dass sie bei auf der Auflage aufliegender Speicherleuchtstoffplatte der Speicherleuchtstoffschicht unmittelbar benachbart sind. Auf diese Weise kann die Anregungsstrahlung besonders exakt auf die anzuregende Speicherleuchtstoffschicht gerichtet und die von der Speicherleuchtstoffschicht aufgrund des Anregens ausgegebene Emissionsstrahlung besonders genau erfasst werden.

Beispielhaft ist der Abstandssensor so ausgestaltet, dass er den Abstand dann bestimmt, wenn die Anregungsstrahlung auf die Speicherleuchtstoffschicht auftrifft. Bei dieser Ausgestaltung kann genau dann, wenn die Speicherleuchtstoffschicht angeregt wird und Emissionsstrahlung abgibt, der Abstand, und damit die Unebenheit der Speicherleuchtstoffplatte, festgestellt werden. Dies führt zu einer besonders genauen Zuordnung von detektierter Röntgeninformation und festgestelltem Abstand. Es ist dadurch möglich, beim Verarbeiten der Röntgeninformationen ein besonders gutes Röntgenbild zu erzeugen.

Vorteilhafterweise ist der Abstandssensor so angeordnet, dass er den Abstand an einer Stelle der Speicherleuchtstoffplatte bestimmt, die an einem Ort oder wenigstens in der Nähe eines Ortes ist, an dem die Anregungsstrahlung auf die Speicherleuchtstoffschicht auftrifft. Bei dieser Ausgestaltung kann genau dort, wo die Speicherleuchtstoffschicht angeregt wird und Emissionsstrahlung abgibt, der Abstand, und damit die Unebenheit der Speicherleuchtstoffplatte, festgestellt werden. Dies führt zu einer noch genaueren Zuordnung von detektierter Röntgeninformation und festgestelltem Abstand. Dadurch ist es möglich, beim Verarbeiten der Röntgeninformationen ein noch besseres Röntgenbild zu erzeugen.

In einer beispielhaften Ausgestaltung der Erfindung enthält die Vorrichtung mehrere Abstandssensoren zum Bestimmen von Abständen zu der auf der Auflage aufliegenden Speicherleuchtstoffplatte. Dadurch kann der Krümmungsverlauf der Speicherleuchtstoffplatte sehr genau bestimmt werden, was zu einem noch weiter verbesserten Verarbeiten der Röntgeninformationen und zu einem qualitativ besonders hochwertigen Röntgenbild führt.

Beispielsweise ist dabei wenigstens einer der mehreren Abstandssensoren so angeordnet, dass der Abstand zu der Trägerschicht der Speicherleuchtstoffplatte bestimmbar ist. Ferner ist wenigstens ein anderer der mehreren Abstandssensoren so angeordnet, dass der Abstand zu der Speicherleuchtstoffschicht der Speicherleuchtstoffplatte bestimmbar ist. Auf diese Weise ist sowohl auf der Vorderals auch auf der Rückseite der Speicherleuchtstoffplatte wenigstens ein Abstand bestimmbar. Dies führt zu einem besonders genauen Bestimmen einer Krümmung der Speicherleuchtstoffplatte, die dann entsprechend beim Verarbeiten der Röntgeninformationen berücksichtigt werden kann.

Beispielhaft ist wenigstens ein Leitelement zum Unterstützen der Ebenheit wenigstens eines Bereichs der Speicherleuchtstoffplatte vorhanden. Ein solches Leitelement kann insbesondere so angeordnet sein, dass es die Speicherleuchtstoffplatte im Bereich einer Krümmung in Richtung der Auflage drückt oder zieht, um dadurch die beim Anregen mittels der Anregungsstrahlung und beim Ausgeben der Emissionsstrahlung in der Speicherleuchtstoffplatte vorhandene Krümmung zu reduzieren. Ein solches Leitelement kann insbesondere mittels einer Bürste realisiert sein.

Weitere Vorteile der Erfindung ergeben sich aus der folgenden Beschreibung eines bevorzugten Beispiels und Ausführungsbeispiels, wobei Bezug auf die beigefügten Zeichnungen genommen wird.

Es zeigen:
- Fig. 1: ein Beispiel einer Speicherleuchtstoffplatte;
- Fig. 2: ein Ausführungsbeispiel einer erfindungsgemäßen Vorrichtung zum Auslesen von in einer Speicherleuchtstoffschicht abgespeicherten Röntgeninformationen und
- Fig. 3: ein weiteres Ausführungsbeispiel einer erfindungsgemäßen Vorrichtung.

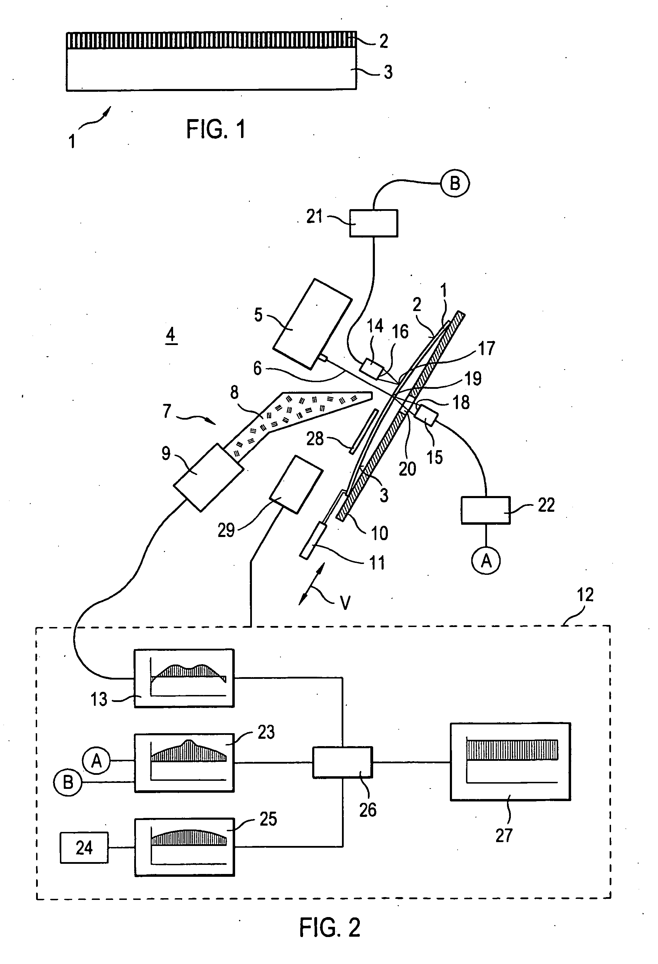

Fig. 1 zeigt ein Beispiel einer Speicherleuchtstoffplatte 1. Die Speicherleuchtstoffplatte 1 enthält eine Speicherleuchtstoffschicht 2 und eine Trägerschicht 3, auf der die Speicherleuchtstoffschicht 2 aufgebracht ist. Die Speicherleuchtstoffschicht 2 setzt sich vorzugsweise aus einer Vielzahl von Phosphorpartikeln zusammen, die zum Speichern von Röntgeninformationen dienen. Die Trägerschicht 3 ist hier ein Laminat, das vorteilhafterweise ein Dicke von 1-2 mm hat. Das Laminat enthält insbesondere eine Schicht mit Kunstharz, die mit Glasfaser oder Kohlefaser verstärkt ist. Eine solche Trägerschicht ist relativ steif, so dass sie eine homogene Krümmung ausbildet. Besonders praktikable Trägerschichten haben einen Elastizitätsmodul von 15-30 MPa. Die Ausprägung einer solchen homogenen Krümmung lässt sich einfachheitshalber mittels einer Abstandsmessung bestimmen.

Fig. 2 zeigt ein Ausführungsbeispiel einer erfindungsgemäßen Auslesevorrichtung 4 zum Auslesen von in der Speicherleuchtstoffschicht 2 abgespeicherten Röntgeninformationen. Diese Röntgeninformationen wurden in der Speicherleuchtstoffschicht 2 bei deren Bestrahlen mit Röntgenstrahlung abgespeichert. Zum Auslesen der abgespeicherten Röntgeninformationen enthält die Auslesevorrichtung 4 eine Bestrahlungseinrichtung 5, die zum Bestrahlen der Speicherleuchtstoffschicht 2 mit einer Anregungsstrahlung 6 dient. Die Bestrahlungseinrichtung 5 ist vorteilhafterweise so ausgestaltet, dass das Bestrahlen der Speicherleuchtstoffschicht 2 mit der Anregungsstrahlung 6 zeilenweise erfolgt. Als Bestrahlungseinrichtung 5 wird hier eine sogenannte "Flying-Spot" Bestrahlungseinrichtung verwendet, bei der ein von einem Laser ausgegebener Laserstrahl auf einen drehbar gelagerten Polygonspiegel gerichtet ist. Der Polygonspiegel rotiert, so dass der Laserstrahl über eine Zeile der Speicherleuchtstoffschicht 2 geführt wird. Dabei werden nacheinander einzelne Punkte der Zeile angeregt. Alternativ kann als Bestrahlungseinrichtung 5 beispielsweise auch eine Laserdiodenzeile eingesetzt werden, die eine Vielzahl von nebeneinander angeordneten Laserdioden enthält. Mit dieser Laserdiodenzeile wird eine Zeile der Speicherleuchtstoffschicht 2 bestrahlt und angeregt.

Aufgrund des Anregens der Speicherleuchtstoffschicht 2 mittels der Anregungsstrahlung 6 emittiert diese eine Emissionsstrahlung, deren Intensität von den in der Speicherleuchtstoffschicht 2 abgespeicherten Röntgeninformationen abhängt. Zum Erfassen der emittierten Emissionsstrahlung enthält die Auslesevorrichtung 4 eine Detektionseinrichtung 7. Diese enthält im vorliegenden Ausführungsbeispiel nach Fig. 2 einen Lichtleiter 8 mit einem angeschlossenen Photomultiplier 9. Der Lichtleiter 8 sammelt ausgegebene Emissionsstrahlung auf und leitet sie an den Photomultiplier 9 weiter. Alternativ kann die Detektionseinrichtung 7 beispielsweise einen Zeilendetektor aufweisen, der eine sogenannte "charge-coupled-device" (CCD)-Zeile enthalten kann. Die CCD-Zeile weist eine Vielzahl von parallel in einer Linie nebeneinander angeordneten Fotodetektoren auf. Mittels der Detektionseinrichtung 7 kann eine fotoelektrische Wandlung der empfangenen Emissionsstrahlung durchgeführt werden. Zwischen der Bestrahlungseinrichtung 5 und der Detektionseinrichtung 7 besteht eine feste Verbindung, so dass die Abbildung der in der Speicherleuchtstoffschicht 2 gespeicherten Röntgeninformationen, d. h. die Anregung der Speicherleuchtstoffschicht und der Empfang der aufgrund der Anregung emittierten Strahlung, genau aufeinander abgestimmt sind und auch während des eigentlichen Auslesevorgangs immer eine exakte Zuordnung gewährleistet ist.

Die Auslesevorrichtung 4 weist ferner eine Auflage 10 auf, auf der die Speicherleuchtstoffplatte 1 zum Auslesen aufliegt. Die Auflage 10 hat eine Auflagefläche, die Auflagepunkte zum Aufliegen der Speicherleuchtstoffplatte 1 zur Verfügung stellt. Die Auflage 10 ist insbesondere tischförmig ausgestaltet. Die Speicherleuchtstoffplatte 1 ist auf der Auflage 10 sicher gelagert. Im vorliegenden Ausführungsbeispiel sind sowohl die Bestrahlungseinrichtung 5 als auch die Detektionseinrichtung 7 auf der gleichen Seite der Auflage 10 angeordnet. Dabei liegt die Speicherleuchtstoffplatte 1 so auf der Auflage 10, dass die Speicherleuchtstoffschicht 2 der Bestrahlungseinrichtung 5 und der Detektionseinrichtung 7 zugewandt ist. Die Trägerschicht 3 liegt auf der Auflage 10 auf und ist eine reflektierende Trägerschicht. Diejenige Seite der Auflage 10, auf der die Speicherleuchtstoffplatte 1 aufliegt, wird hier als Vorderseite und diejenige Seite, die der aufliegenden Speicherleuchtstoffplatte 1 abgewandt ist, als Rückseite der Auflage 10 bezeichnet. Es ist ebenso möglich, die Bestrahlungseinrichtung 5 auf der einen Seite der Auflage 10 und die Detektionseinrichtung 7 auf der anderen Seite der Auflage 10 anzuordnen. In diesem Fall ist die Trägerschicht 3 als transparente Trägerschicht ausgestaltet. Die Auflage 10 ist in diesem Fall vorteilhafterweise so ausgestaltet, dass sie nur an ihren Rändern Auflagebalken hat, auf denen die Speicherleuchtstoffplatte 1 aufliegt, so dass- je nach Ausgestaltung - entweder die von der Speicherleuchtstoffschicht 2 ausgegebene Emissionsstrahlung oder die von der Bestrahlungseinrichtung 5 ausgegebene Anregungsstrahlung 6 ungehindert durch die Auflage 10 hindurch gelangen kann.

Über ein Antriebsmittel 11, das beispielsweise ein Linearmotor sein kann, ist die Auflage 10 zum Auslesen der in der Speicherleuchtstoffschicht 2 abgespeicherten Röntgeninformationen in eine Verschiebungsrichtung V bewegbar. Dadurch kann ein Vorschub erzeugt werden, um die gesamte Speicherleuchtstoffschicht 2 mittels des zeilenweisen Anregens und Detektierens auszulesen. Die Bestrahlungseinrichtung 5 und die Detektionseinrichtung 7 sind dabei fest in der Auslesevorrichtung 4 montiert. Alternativ kann die Auflage 10 fest in der Auslesevorrichtung 4 montiert sein. In diesem Fall werden die Bestrahlungseinrichtung 5 und die Detektionseinrichtung 7 mittels des Antriebsmittels 11 in die Verschiebungsrichtung V an der Speicherleuchtstoffplatte 1 vorbei bewegt.

Die Auslesevorrichtung 4 enthält des Weiteren ein Steuermittel 12, das zum Steuern des Auslesens der Röntgeninformationen ausgestaltet ist. Dazu ist es mit den verschiedenen Komponenten der Auslesevorrichtung 4 verbunden. Das Steuermittel 12 ist insbesondere mit dem Photomultiplier 9 verbunden, um die von dem Photomultiplier 9 erzeugten elektrischen Signale, die ein Abbild der in der Speicherleuchtstoffschicht 2 abgespeicherten Röntgeninformationen enthalten, zu verarbeiten. Der Photomultiplier 9 enthält einen Analog-Digital-Wandler mit dem die bei der fotoelektrischen Wandlung erhaltenen analogen elektrischen Signale in entsprechende digitale Signale gewandelt werden, die dann dem Steuermittel 2 zugeführt werden. In der Fig. 2 ist ein Beispiel für ein solches vom Photomultiplier 9 geliefertes Signal in schematischer Darstellung in einem Diagramm 13 dargestellt.

Die auf der Auflage 10 aufliegende Speicherleuchtstoffplatte 1 ist im Allgemeinen nicht vollständig eben. Dadurch können in dem von der Detektionseinrichtung 7 erzeugten Detektionssignal fehlerhafte Signalschwankungen auftreten. Diese Signalschwankungen erzeugen im Röntgenbild unerwünschte Bildfehler. Um dies zu vermeiden, weist die Auslesevorrichtung 4 zwei Abstandssensoren 14 und 15 auf, mit denen sich eine Unebenheit, und damit eine Krümmung, der Speicherleuchtstoffplatte 1 feststellen lässt. Im Ausführungsbeispiel nach Fig. 2 ist der Abstandssensor 14 auf der Vorderseite der Auflage 10 angeordnet. Der Abstandssensor 14 misst den Abstand von einem Referenzort 16 an seiner Unterseite und einem Ort 17 auf der Oberfläche der Speicherleuchtstoffschicht 2. Der Ort 17 befindet sich vorzugsweise direkt unterhalb der Referenzortes 16. Der Abstandssensor 15 befindet sich auf der Rückseite der Auflage 10. Der Abstandssensor 15 misst einen Abstand von einem Referenzort 18 an seiner Unterseite und einem Ort 19 auf der Oberfläche der Trägerschicht 3. Der Ort 19 befindet sich vorzugsweise direkt unterhalb der Referenzortes 18. Auf der direkten Verbindungslinie zwischen dem Referenzort 18 und dem Ort 19 ist in der Auflage 10 ein Durchbruch 20 vorhanden, um dem Abstandssensor 15 eine direkte Verbindung zu der Trägerschicht 3 zu ermöglichen. Die Abstandssensoren 14, 15 sind innerhalb der Auslesevorrichtung 4 insbesondere fest montiert. Sie werden von dem Steuermittel 12 so angesteuert, dass sie in vorgegebenen, regelmäßigen, zeitlichen Abständen den jeweiligen Abstand zu der auf der Auflage 10 aufliegenden, an den Abstandssensoren 14, 15 vorbei bewegten Speicherleuchtstoffplatte 1 feststellen. Dadurch wird eine Vielzahl von Abständen bestimmt, die ein Abbild des Krümmungsverlaufs der Speicherleuchtstoffplatte 1 angeben. Die festgestellten Abstände werden über den Abstandssensoren 14 und 15 zugeordnete Analog-Digital-Wandler 21 bzw. 22 dem Steuermittel 12 zugeleitet. In der Fig. 2 ist aus Darstellungsgründen die Verbindung zwischen dem Analog-Digital-Wandler 22 und dem Steuermittel 12 mittels eines Verbindungsplatzhalters A und die Verbindung zwischen dem Analog-Digital-Wandler 21 und dem Steuermittel 12 mittels eines Verbindungsplatzhalters B dargestellt.

In der Fig. 2 ist ein Beispiel für ein von den Abstandssensoren 14 und 15 geliefertes Signal mit Abständen in schematischer Darstellung in einem Diagramm 23 dargestellt. Das Diagramm 23 zeigt einen Krümmungsverlauf der Speicherleuchtstoffplatte 1. Dabei ist es möglich, die von den beiden Abstandssensoren 14, 15 getrennt gelieferten Abstandsangaben im Steuermittel 12 in geeigneter Weise miteinander zu kombinieren. Gegebenenfalls kann auch eine Plausibilitätskontrolle vorgenommen werden. Dadurch, dass der Abstandssensor 15 auf der Rückseite der Auflage 10 angeordnet ist, ist die Dicke der Speicherleuchtstoffplatte 1 bei dem Verarbeiten der vom Abstandssensor 15 gelieferten Abstände zu berücksichtigen. Die von den Abstandssensoren 14, 15 gemessenen Abstände entsprechen Abstandsschwankungen der Oberfläche der Speicherleuchtstoffschicht 2 zu der Detektionseinheit 7, insbesondere zu deren Lichtleiter 8, der die von der Speicherleuchtstoffschicht 2 ausgegebene Emissionsstrahlung aufnimmt. Diese Abstandsschwankungen werden von dem Steuermittel 12 beim Verarbeiten der vom Photomultiplier 9 gelieferten Signale mit ausgelesenen Röntgeninformationen verwendet. Im Steuermittel 12 findet eine Ausgleichsberechnung statt.

Die Abstandssensoren 14, 15 sind hier in unmittelbarer Nähe des durch die Bestrahlungseinrichtung 5 bestimmten Anregungsortes und des durch die Detektionseinrichtung 7 bestimmten Detektionsortes angeordnet. Dabei ist der Abstandssensor 15 so angeordnet, dass er den Abstand an demjenigen Ort der Trägerschicht 3 bestimmt, der sich direkt unterhalb des Ortes der Speicherleuchtstoffschicht 2 befindet, an dem die Anregungsstrahlung 6 auf die Speicherleuchtstoffschicht 2 trifft. Der Abstandssensor 14 ist gegenüber dem Abstandssensor 15 in Vorschubrichtung V seitlich versetzt angeordnet. Vorteilhafterweise ist der Abstandssensor 14 - in Vorschubrichtung V betrachtet - hinter dem Anregungs- und Detektionsort platziert, so dass ein eventuelles Anregen der Speicherleuchtstoffschicht 2 durch den Abstandssensor 14 keinen Einfluss auf die von der Detektionseinrichtung 7 ausgelesenen Röntgeninformationen hat. Das Bestimmen der Abstände mittels der Abstandssensoren 14, 15 erfolgt im vorliegenden Ausführungsbeispiel während des Auslesens der Röntgeninformationen. Dadurch wird gewährleistet, dass sowohl das Auslesen als auch das Bestimmen der Abstände gemeinsam in einem Durchlauf der Speicherleuchtstoffplatte 1 durch die Auslesevorrichtung 4 vorgenommen wird. Des Weiteren sind die bestimmten Abstände tatsächlich diejenigen, die beim Auslesen der Röntgeninformationen vorhanden sind.

Als Abstandssensoren 14, 15 können insbesondere berührungslose Sensoren, wie z. B. optische Sensoren, eingesetzt werden. Besonders geeignet sind Lasertriangulationssensoren. Es ist aber ebenso möglich, kapazitive oder induktive Sensoren oder Sensoren auf Ultraschall basis zu verwenden. Generell kann auch ein Abtasten durch Berührung erfolgen, beispielsweise auf der Grundlage potentiometrischer Prinzipien. Dabei sind die verwendeten Komponenten aber wegen der Beeinflussung des Messergebnisses durch Krafteinleitung entsprechend geeignet zu kalibrieren.

Zusätzlich zu den beiden Abstandssensoren 14, 15 können auch weitere Sensoren zum Bestimmen von Abständen zu der Speicherleuchtstoffplatte 1 vorhanden sein. Dies verbessert gegebenenfalls noch mehr das Verarbeiten der Röntgeninformationen durch das Steuermittel 12. Es ist allerdings ebenso möglich, statt zweier Abstandssensoren nur einen einzigen einzusetzen. Dabei werden weniger Komponenten zum Aufbau der Auslesevorrichtung 4 benötigt und auch das Verarbeiten der Röntgeninformationen in dem Steuermittel 12 erfolgt auf einfachere Weise. Ein einziger Abstandssensor ist insbesondere dann ausreichend, wenn eine Speicherleuchtstoffplatte 1 mit einer besonders steifen Trägerschicht 3 eingesetzt wird, deren Krümmungsverhalten bekannt und nahezu regelmäßig gleich ist. In diesem Fall reicht es unter Umständen auch aus, den Abstand nur ein einziges Mal, beispielsweise in der Mitte der Speicherleuchtstoffplatte 1, zu bestimmen, da damit der vollständige Krümmungsverlauf bekannt ist.

Das Steuermittel 12 enthält einen Speicher 24, in dem für die Speicherleuchtstoffplatte 1 mehrere Krümmungsverläufe als sogenannte Look-Up Tabellen abgespeichert sind. Die Ausprägungen der Krümmungsverläufe wurden vorteilhafterweise in Vorversuchen bestimmt und geben typische, insbesondere homogene Krümmungskurven der Speicherleuchtstoffplatte 1 an. Die in den Look-Up Tabellen abgespeicherten Krümmungsverläufe entsprechen somit insbesondere Erfahrungswerten des Krümmungsverhaltens der Speicherleuchtstoffplatte 1. Abhängig von verschiedenen Faktoren, wie z. B. der Lage der Speicherleuchtstoffplatte 1 in der Auslesevorrichtung 4, dem Abnutzungsgrad der Speicherleuchtstoffplatte 1, etc., kann das Krümmungsverhalten der Speicherleuchtstoffplatte 1 verschieden sein. Durch das Bestimmen eines Abstands mittels eines oder beider Abstandssensoren 14, 15 kann abhängig von diesem Abstand auf die relevante Krümmungskurve geschlossen werden. Die passende, dieser relevanten Krümmungskurve entsprechende Look-Up Tabelle wird somit von dem Steuermittel 12 aus dem Speicher 24 ausgelesen. In der Fig. 2 ist eine solche Krümmungskurve in einem Diagramm 25 dargestellt. An Stelle der mehreren, in dem Speicher 24 abgespeicherten Krümmungsverläufe für die Speicherleuchtstoffplatte 1 kann es auch ausreichen, nur einen einzigen Krümmungsverlauf für die Speicherleuchtstoffplatte 1 in einer Look-Up Tabelle abzulegen.

Das Steuermittel 12 ist so ausgestaltet, dass es den ausgewählten Krümmungsverlauf beim Verarbeiten der ausgelesenen Röntgeninformationen berücksichtigt. Das Steuermittel enthält einen digitalen Signalprozessor 26, dem Daten zum ausgewählten Krümmungsverlauf (Diagramm 25), die von den Abstandssensoren 14, 15 ermittelten Abstände (Diagramm 23) und die Daten zu den ausgegebenen Röntgeninformationen (Diagramm 13) zugeführt werden. Aus diesen Angaben ermittelt der Signalprozessor 26 die tatsächlich in der Speicherleuchtstoffschicht 2 abgespeicherten Röntgeninformationen. In der Fig. 2 sind diese schematisch in einem Diagramm 27 dargestellt. Das in der Fig. 2 in den Diagrammen 13, 23, 25 und 27 dargestellte Ausführungsbeispiel entspricht einer Graubelichtung der Speicherleuchtstoffschicht 2 mit einer Erschütterung.

Zum Unterstützen der Ebenheit der Speicherleuchtstoffplatte 1 ist in der Auslesevorrichtung 4 wenigstens ein Leitelement 28 vorhanden. Das Leitelement 28 kann vorteilhafterweise eine Bürste sein. Das Leitelement 28 gewährleistet hier, dass die Speicherleuchtstoffplatte 1 eine durch das Leitelement 28 vorgegebene maximale Krümmung nicht überschreitet. Das Leitelement 28 begrenzt das Verbiegen der Speicherleuchtstoffplatte 1. Die Wirkung des Leitelementes 28 kann auf einen oder mehrere Bereiche der Speicherleuchtstoffplatte 1 begrenzt sein. Insbesondere kann es seine Wirkung in dem Bereich des Anregens und Auslesens der Speicherleuchtstoffschicht 2 entfalten. Das Leitelement unterstützt die Ebenheit der Speicherleuchtstoffplatte 1 insbesondere, um Signalschwankungen beim Auslesen, z. B. durch externe Vibrationen, auszuschließen und/oder die mechanische Zuverlässigkeit zu erhöhen.

Die Auslesevorrichtung 4 enthält ferner ein Erkennungsmittel 29 zum Erkennen des Typs der auf der Auflage 10 befindlichen Speicherleuchtstoffplatte 1. Dazu kann auf der Speicherleuchtstoffplatte 1 eine entsprechende Identifikation, z. B. eine Markierung, vorhanden sein, die das Erkennungsmittel 29 liest. Das Erkennungsmittel 29 ist mit dem Steuermittel 12 verbunden, um diesem den Typ der Speicherleuchtstoffplatte 1 zu übermitteln. Das Steuermittel ist so ausgestaltet, dass in dem Speicher 24 Look-Up Tabellen für verschiedene Typen von Speicherleuchtstoffplatten abgespeichert sind. Abhängig von dem erkannten Typ wählt das Steuermittel 12 eine der abgespeicherten Look-Up Tabellen aus, um sie beim Verarbeiten der Röntgeninformationen einzusetzen. Der Typ der eingesetzten Speicherleuchtstoffplatte 1, und insbesondere ihrer Trägerschicht 3, kann des Weiteren auch dazu genutzt werden, die Abstandssensoren anzusteuern. Beispielsweise kann die Häufigkeit des Bestimmens des Abstands von der Steifigkeit der verwendeten Trägerschicht 3 abhängen. Je homogener und stabiler (steifer) der Aufbau der Speicherleuchtstoffplatte 1, desto mehr kann auf die aktuelle Bestimmung von Abständen verzichtet werden, da ein weitgehend zutreffender Krümmungsverlauf und Erfahrungswerte zum Verarbeiten und Korrigieren der ausgelesenen Röntgeninformationen in den Look-Up Tabellen in dem Speicher 24 vorhanden sind.

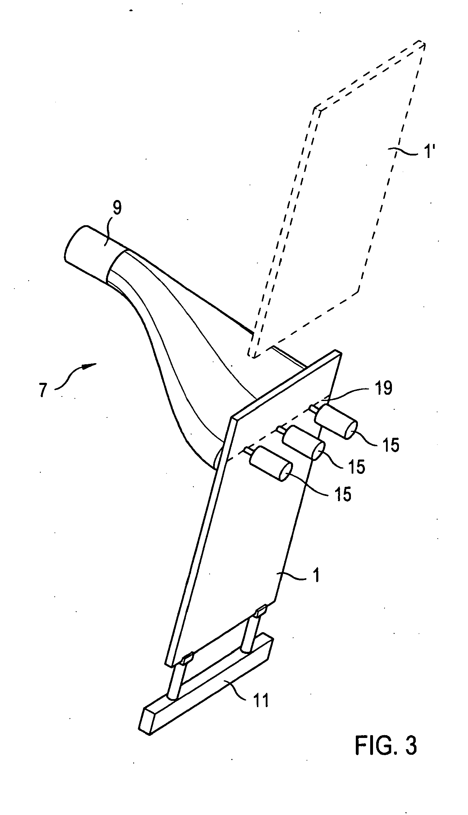

Fig. 3 zeigt ein weiteres Ausführungsbeispiel einer erfindungsgemäßen Vorrichtung 4. In diesem Beispiel wird die Speicherleuchtstoffplatte 1 bzw. 1' durch ein Antriebsmittel 11 in Verschiebungsrichtung V an der Detektionseinrichtung 7, die einen Lichtleiter 8 und einen Photomultiplier 9 umfasst, vorbei transportiert. Die Speicherleuchtstoffplatte 1 wird in dem gezeigten Beispiel durch seitliche, parallel zur Verschiebungsrichtung V verlaufende Führungsschienen (nicht dargestellt) oder durch entlang der Verschiebungsrichtung V angeordnete Rollen (nicht dargestellt) geführt.

Wegen der freitragenden Führung der Speicherleuchtstoffplatte 1 weist diese im Allgemeinen nicht die für ein exaktes Auslesen erforderliche Ebenheit auf. Insbesondere kann die Speicherleuchtstoffplatte 1 aufgrund der Schwerkraft oder innerer Spannungen im Material der Trägerschicht leicht verformt werden. Um die Abweichung der Speicherleuchtstoffplatte 1 von einer idealen Ebene bzw. den Verlauf deren Verformung zu erfassen, sind in dem gezeigten Beispiel drei Abstandssensoren 15 vorgesehen, die den Abstand des jeweiligen Abstandssensors 15 zur Trägerschicht der Speicherleuchtstoffplatte 1 im Bereich der Scanlinie 19 erfassen. Die Scanlinie 19 stellt hierbei den Ort dar, an dem die Anregungsstrahlung auf die Speicherleuchtstoffschicht trifft. Die Verarbeitung der Signale der Abstandssensoren 15 und die entsprechende Korrektur des Signals des Photomultipliers 9 erfolgt analog zu dem in Figur 2 beschriebenen Ausführungsbeispiel.

## Patentansprüche

1. Vorrichtung (4) zum Auslesen von in einer Speicherleuchtstoffschicht (2) abgespeicherten Röntgeninformationen mit
- einer Auflage (10) zum Auflegen oder Führen einer Speicherleuchtstoffplatte (1), welche die Speicherleuchtstoffschicht (2) und eine Trägerschicht (3), auf der die Speicherleuchtstoffschicht (2) aufgebracht ist, umfasst,
- einem Steuermittel (12) zum Verarbeiten von aus der Speicherleuchtstoffschicht (2) ausgelesenen Röntgeninformationen und
- einem Abstandssensor (14, 15) zum Bestimmen eines Abstands des Abstandssensors (14, 15) von der auf der Auflage (10) aufliegenden bzw. geführten Speicherleuchtstoffplatte (1),
**dadurch gekennzeichnet, dass**
mittels des Abstandssensors (14, 15) eine Unebenheit der Speicherleuchtstoffplatte (1) festgestellt werden kann und das Steuermittel (12) so ausgestaltet ist, dass es die aus der Speicherleuchtstoffschicht (2) ausgelesenen Röntgeninformationen in Abhängigkeit von dem mittels des Abstandssensors (14, 15) bestimmten Abstand verarbeitet, wobei die Unebenheit der Speicherleuchtstoffplatte (1) berücksichtigt wird.

2. Vorrichtung nach Anspruch 1, **dadurch gekennzeichnet, dass** der Abstandssensor (15) so angeordnet ist, dass der Abstand des Abstandssensors 15) von der Trägerschicht (3) der Speicherleuchtstoffplatte (1) bestimmbar ist.

3. Vorrichtung nach Anspruch 1, **dadurch gekennzeichnet, dass** der Abstandssensor (14) so angeordnet ist, dass der Abstand des Abstandssensors (14) zu der Speicherleuchtstoffschicht (2) der Speicherleuchtstoffplatte (1) bestimmbar ist.

4. Vorrichtung nach einem der vorhergehenden Ansprüche, **dadurch gekennzeichnet, dass** die Auflage (10) einen Durchbruch (20) aufweist und der Abstandssensor (15) auf derjenigen Seite der Auflage (10), die der aufliegenden Speicherleuchtstoffplatte (1) abgewandt ist, so angeordnet ist, dass der Abstand durch den Durchbruch (20) hindurch bestimmbar ist.

5. Vorrichtung nach einem der vorhergehenden Ansprüche, **dadurch gekennzeichnet, dass** der Abstandssensor (14, 15) ein berührungsloser, insbesondere ein optischer, Sensor ist.

6. Vorrichtung nach einem der vorhergehenden Ansprüche, **dadurch gekennzeichnet, dass** das Steuermittel (12) Angaben zu einem Krümmungsverlauf der Speicherleuchtstoffplatte (1) aufweist und so ausgestaltet ist, dass es die aus der Speicherleuchtstoffschicht (2) ausgelesenen Röntgeninformationen in Abhängigkeit von diesen Angaben verarbeitet.

7. Vorrichtung nach Anspruch 6, **dadurch gekennzeichnet, dass** das Steuermittel (12) Angaben zu mehreren verschiedenen Krümmungsverläufen der Speicherleuchtstoffplatte (1) aufweist und so ausgestaltet ist, dass es die Angaben zu einem der mehreren verschiedenen Krümmungsverläufe in Abhängigkeit von dem bestimmten Abstand auswählt und die aus der Speicherleuchtstoffschicht (2) ausgelesenen Röntgeninformationen in Abhängigkeit von den ausgewählten Angaben verarbeitet.

8. Vorrichtung nach Anspruch 6 oder 7, **dadurch gekennzeichnet, dass** ein Erkennungsmittel (29) zum Erkennen eines Typs der auf der Auflage (10) aufliegenden Speicherleuchtstoffplatte (1) vorhanden ist und das Steuermittel (12) für mehrere verschiedene Typen von Speicherleuchtstoffplatten (1) Angaben zu einem oder mehreren Krümmungsverläufen aufweist und so ausgestaltet ist, dass es die Angaben zu dem Krümmungsverlauf in Abhängigkeit von dem erkannten Typ der verwendeten Speicherleuchtstoffplatte (1) auswählt und die aus der Speicherleuchtstoffschicht (2) ausgelesenen Röntgeninformationen in Abhängigkeit von den ausgewählten Angaben verarbeitet.

9. Vorrichtung nach einem der vorhergehenden Ansprüche, **dadurch gekennzeichnet, dass** eine Bestrahlungseinrichtung (5) zum Bestrahlen der Speicherleuchtstoffschicht (2) mit einer Anregungsstrahlung (6) vorhanden ist.

10. Vorrichtung nach Anspruch 9, **dadurch gekennzeichnet, dass** der Abstandssensor (14, 15) so ausgestaltet ist, dass er den Abstand dann bestimmt, wenn die Anregungsstrahlung (6) auf die Speicherleuchtstoffschicht (2) auftrifft.

11. Vorrichtung nach Anspruch 9 oder 10, **dadurch gekennzeichnet, dass** der Abstandssensor (14, 15) so angeordnet ist, dass er den Abstand an einer Stelle (17, 19) der Speicherleuchtstoffplatte (1) bestimmt, die an einem Ort oder wenigstens in der Nähe eines Ortes ist, an dem die Anregungsstrahlung (6) auf die Speicherleuchtstoffschicht (2) auftrifft.

12. Vorrichtung nach einem der Ansprüche 9 bis 11, **dadurch gekennzeichnet, dass** eine Detektionseinrichtung (7) zum Erfassen von Emissionsstrahlung, die die Speicherleuchtstoffschicht (2) aufgrund des Bestrahlens mittels der Anregungsstrahlung (6) ausgibt, vorhanden ist.

13. Vorrichtung nach einem der vorhergehenden Ansprüche, **dadurch gekennzeichnet, dass** mehrere Abstandssensoren (14, 15) vorhanden sind.

14. Vorrichtung nach Anspruch 13, **dadurch gekennzeichnet, dass** wenigstens einer der mehreren Abstandssensoren (14, 15) so angeordnet ist, dass der Abstand zu der Trägerschicht (3) der Speicherleuchtstoffplatte (1) bestimmbar ist, und wenigstens ein anderer der mehreren Abstandssensoren (14, 15) so angeordnet ist, dass der Abstand zu der Speicherleuchtstoffschicht (2) der Speicherleuchtstoffplatte (1) bestimmbar ist.

15. Vorrichtung nach einem der vorhergehenden Ansprüche, **dadurch gekennzeichnet, dass** wenigstens ein Leitelement (28) zum Unterstützen der Ebenheit wenigstens eines Bereichs der Speicherleuchtstoffplatte (1) vorhanden ist.

## Claims

1. An apparatus (4) for reading out X-ray information stored in a storage phosphor layer (2) having
- a support (10) for supporting or guiding a storage phosphor plate (1) which comprises the storage phosphor layer (2) and a carrier layer (3) onto which the storage phosphor layer (2) is applied,
- a control means (12) for processing X-ray information read out from the storage phosphor layer (2), and
- a distance sensor (14, 15) for determining a distance between the distance sensor (14, 15) and the storage phosphor plate (1) supported or guided on the support,
**characterised in that**
by means of the distance sensor (14, 15) an unevenness of the storage phosphor plate (1) can be established, and the control means (12) is designed such that it processes the X-ray information read out from the storage phosphor layer (2) dependently upon the distance determined by means of the distance sensor (14, 15), the unevenness of the storage phosphor plate (1) being taken into consideration.

2. The apparatus according to Claim 1, **characterised in that** the distance sensor (15) is arranged such that the distance between the distance sensor (15) and the carrier layer (3) of the storage phosphor plate (1) can be determined.

3. The apparatus according to Claim 1, **characterised in that** the distance sensor (14) is arranged such that the distance between the distance sensor (14) and the storage phosphor layer (2) of the storage phosphor plate (1) can be determined.

4. The apparatus according to any of the preceding claims, **characterised in that** the support (10) has a cut-out (20) and the distance sensor (15) is disposed on the side of the support (10) which faces away from the supported storage phosphor plate (1) such that the distance can be determined through the cut-out (20).

5. The apparatus according to any of the preceding claims, **characterised in that** the distance sensor (14, 15) is a contact-free, in particular optical, sensor.

6. The apparatus according to any of the preceding claims, **characterised in that** the control means (12) has details regarding a course of curvature of the storage phosphor plate (1) and is designed such that it processes the X-ray information read out from the storage phosphor layer (2) dependently upon these details.

7. The apparatus according to Claim 6, **characterised in that** the control means (12) has details regarding a number of different courses of curvature of the storage phosphor plate (1) and is designed such that it selects the details regarding one of the number of different courses of curvature dependently upon the distance determined, and processes the X-ray information read out from the storage phosphor layer (2) dependently upon the selected details.

8. The apparatus according to Claim 6 or 7, **characterised in that** a recognition means (29) for recognising a type of storage phosphor plate (1) supported on the support (10) is provided, and the control means (12) has for a number of different types of storage phosphor plate (1) details regarding one or more courses of curvature, and is designed such that it selects the details regarding the course of curvature dependently upon the recognised type of storage phosphor plate (1) used, and processes the X-ray information read out from the storage phosphor layer (2) dependently upon the selected details.

9. The apparatus according to any of the preceding claims, **characterised in that** an irradiation device (5) for irradiating the storage phosphor layer (2) with excitation radiation (6) is provided.

10. The apparatus according to Claim 9, **characterised in that** the distance sensor (14, 15) is designed such that it determines the distance when the excitation radiation (6) strikes the storage phosphor layer (2).

11. The apparatus according to Claim 9 or 10, **characterised in that** the distance sensor (14, 15) is arranged such that it determines the distance at a point (17, 19) of the storage phosphor plate (1) which is at a location or at least close to a location where the excitation radiation (6) strikes the storage phosphor layer (2).

12. The apparatus according to any of Claims 9 to 11, **characterised in that** a detection device (7) is provided for detecting emission radiation which is emitted by the storage phosphor layer (2) due to the irradiation by means of the excitation radiation (6).

13. The apparatus according to any of the preceding claims, **characterised in that** a number of distance sensors (14, 15) are provided.

14. The apparatus according to Claim 13, **characterised in that** at least one of the number of distance sensors (14, 15) is arranged such that the distance to the carrier layer (13) of the storage phosphor plate (1) can be determined, and at least one other of the number of distance sensors (14, 15) is arranged such that the distance to the storage phosphor layer (2) of the storage phosphor plate (1) can be determined.

15. The apparatus according to any of the preceding claims, **characterised in that** at least one guide element (28) is provided for supporting the evenness of at least one region of the storage phosphor plate (1).

## Revendications

1. Dispositif (4) de lecture d'informations radiographiques stockées dans une couche fluorescente à mémoire (2) comportant :
- une assise (10) servant à déposer ou à guider une plaque fluorescente à mémoire (1) comprenant la couche fluorescente à mémoire (2) et une couche de support (3) sur laquelle est appliquée la couche fluorescente à mémoire (2),
- un moyen de commande (12) servant au traitement des informations radiographiques extraites de la couche fluorescente à mémoire (2), et
- un capteur d'écartement (14, 15) servant à déterminer un écartement séparant le capteur d'écartement (14, 15) de la plaque fluorescente à mémoire (1) posée ou guidée sur l'assise (10),
**caractérisé en ce que**
le capteur d'écartement (14, 15) permet de déterminer un défaut de planéité de la plaque fluorescente à mémoire (1) et **en ce que** le moyen de commande (12) est conçu de manière à traiter les informations radiographiques extraites de la couche fluorescente à mémoire (2) en fonction de l'écartement déterminé par le capteur d'écartement (14, 15) en tenant compte du défaut de planéité de la plaque fluorescente à mémoire (1).

2. Dispositif selon la revendication 1, **caractérisé en ce que** le capteur d'écartement (15) est agencé de sorte à déterminer l'écartement séparant le capteur d'écartement (15) et la couche de support (3) de la plaque fluorescente à mémoire (1).

3. Dispositif selon la revendication 1, **caractérisé en ce que** le capteur d'écartement (14) est agencé de sorte à déterminer l'écartement séparant le capteur d'écartement (14) et la couche fluorescente à mémoire (2) de la plaque fluorescente à mémoire (1).

4. Dispositif selon l'une des revendications précédentes, **caractérisé en ce que** l'assise (10) présente une ouverture (20) et le capteur d'écartement (15) est agencé du côté de l'assise (10) détourné de la plaque fluorescente à mémoire (1) qui y est appliquée, de telle sorte qu'il est possible de déterminer l'écartement à travers l'ouverture (20).

5. Dispositif selon l'une des revendications précédentes, **caractérisé en ce que** le capteur d'écartement (14, 15) est un capteur sans contact, notamment un capteur optique.

6. Dispositif selon l'une des revendications précédentes, **caractérisé en ce que** le moyen de commande (12) présente des indications relatives à un profil de courbure de la plaque fluorescente à mémoire (1) et est conçu de manière à traiter les informations radiographiques extraites de la couche fluorescente à mémoire (2) en fonction de ces indications.

7. Dispositif selon la revendication 6, **caractérisé en ce que** le moyen de commande (12) présente des indications relatives à plusieurs profils de courbure différents de la plaque fluorescente à mémoire (1) et est conçu de manière à sélectionner les indications relatives à l'un des différents profils de courbure en fonction de l'écartement déterminé et à traiter les informations radiographiques extraites de la couche fluorescente à mémoire (2) en fonction des indications sélectionnées.

8. Dispositif selon la revendication 6 ou 7, **caractérisé en ce qu'**on dispose d'un moyen de reconnaissance (29) servant à reconnaître le type de la plaque fluorescente à mémoire (1) appliquée sur l'assise (10) et **en ce que** le moyen de commande (12) présente, pour plusieurs types différents de plaques fluorescentes à mémoire (1), des indications relatives à un ou plusieurs profils de courbure et est conçu de manière à sélectionner les indications relatives au profil de courbure en fonction du type de plaque fluorescente à mémoire (1) utilisée qui a été reconnu et à traiter les informations radiographiques extraites de la couche fluorescente à mémoire (2) en fonction des indications sélectionnées.

9. Dispositif selon l'une des revendications précédentes, **caractérisé en ce qu'**on dispose d'un dispositif d'irradiation (5) servant à irradier la couche fluorescente à mémoire (2) au moyen d'un rayonnement d'excitation (6).

10. Dispositif selon la revendication 9, **caractérisé en ce que** le capteur d'écartement (14, 15) est conçu de manière à déterminer l'écartement au moment où le rayonnement d'excitation (6) est incident sur la couche fluorescente à mémoire (2).

11. Dispositif selon la revendication 9 ou 10, **caractérisé en ce que** le capteur d'écartement (14, 15) est agencé de manière à déterminer l'écartement en un emplacement (17, 19) de la plaque fluorescente à mémoire (1) situé au point, ou moins à proximité du point, auquel le rayonnement d'excitation (6) est incident sur la couche fluorescente à mémoire (2).

12. Dispositif selon l'une des revendications 9 à 11, **caractérisé en ce qu'**on dispose d'un dispositif de détection (7) permettant de détecter le rayonnement d'émission qui est émis par la couche fluorescente à mémoire (2) suite à l'irradiation produite au moyen du rayonnement d'excitation (6).

13. Dispositif selon l'une des revendications précédentes, **caractérisé en ce qu'**on dispose de plusieurs capteurs d'écartement (14, 15).

14. Dispositif selon la revendication 13, **caractérisé en ce que** l'un au moins des plusieurs capteurs d'écartement (14, 15) est agencé de manière à permettre la détermination de l'écartement par rapport à la couche de support (3) de la plaque fluorescente à mémoire (1), et **en ce qu'**au moins un autre des plusieurs capteurs d'écartement (14, 15) est agencé de manière à permettre la détermination de l'écartement par rapport à la couche fluorescente à mémoire (2) de la plaque fluorescente à mémoire (1).

15. Dispositif selon l'une des revendications précédentes, **caractérisé en ce qu'**on dispose d'au moins un élément directeur (28) pour favoriser la planéité d'au moins une partie de la plaque fluorescente à mémoire (1).
